Europäisches Patentamt

European Patent Office

Office européen des brevets

(19)

(11) Veröffentlichungsnummer : **0 129 196**
**B1**

(12)  EUROPÄISCHE PATENTSCHRIFT

(45) Veröffentlichungstag der Patentschrift :
20.01.88

(51) Int. Cl.⁴ : **C 08 G 69/28**

(21) Anmeldenummer : **84106735.8**

(22) Anmeldetag : **13.06.84**

(54) Verfahren zur kontinuierlichen Herstellung von Polyamiden.

(30) Priorität : **15.06.83 DE 3321579**

(43) Veröffentlichungstag der Anmeldung :
**27.12.84 Patentblatt 84/52**

(45) Bekanntmachung des Hinweises auf die Patenterteilung : **20.01.88 Patentblatt 88/03**

(84) Benannte Vertragsstaaten :
**BE CH DE FR GB IT LI NL**

(56) Entgegenhaltungen :
**DE-A- 1 570 932**
**US-A- 3 948 862**
**US-A- 4 019 866**
**Die Akte enthält technische Angaben, die nach dem
Eingang der Anmeldung eingereicht wurden und die
nicht in dieser Patentschrift enthalten sind.**

(73) Patentinhaber : **BASF Aktiengesellschaft
Carl-Bosch-Strasse 38
D-6700 Ludwigshafen (DE)**

(72) Erfinder : **Pipper, Gunter
Schlangenthaler Weg 10
D-6702 Bad Duerkheim (DE)**
Erfinder : **Schmidt, Franz, Dr.
Trommstrasse 3
D-6800 Mannheim 1 (DE)**
Erfinder : **Theysohn, Rainer, Dr.
Am Bruch 38
D-6710 Frankenthal (DE)**
Erfinder : **Riegger, Siegfried, Dr.
J.-B.-von-Weiss-Strasse 18
D-7637 Ettlingen (DE)**
Erfinder : **Heil, Eduard
Hardenburgstrasse 4
D-6703 Limburgerhof (DE)**
Erfinder : **Fischer, Hermann, Dr.
Hardenburgstrasse 33
D-6703 Limburgerhof (DE)**
Erfinder : **Thoma, Richard, Dr.
Panoramastrasse 6
D-6719 Battenberg (DE)**
Erfinder : **Matthies, Paul, Dr.
Truebnerstrasse 59
D-6900 Heidelberg (DE)**

## Beschreibung

Es sind bereits eine Reihe von Verfahren zur Herstellung von Polyamiden aus Salzen aus Dicarbonsäuren und Diaminen z. B. Nylon-6,6-Salz bekannt. In der DE-AS 11 62 562 wird ein Verfahren beschrieben, bei dem man eine wäßrige Lösung von Nylon-6,6-Salz zunächst unter einem Druck von 18 bis 50 atü (entsprechend 17.7 — 49 bar Überdruck) auf eine Temperatur unterhalb des Siedepunktes erhitzt und die erhitzte Lösung unter die Oberfläche einer Polyamidschmelze leitet und Wasser abtrennt. Nach einem anderen aus der DE-OS 15 70 932 bekannten Verfahren wird die wäßrige Nylon-6,6-Salzlösung zunächst ohne Verdampfen von Wasser vorgeheizt, in den unteren Teil einer Kolonne geleitet, Wasser verdampft und die so erhaltene Salzschmelze in einer nachfolgenden Zone kondensiert. Die hierbei entstehenden Dämpfe werden in der darüberliegenden Kolonne rektifiziert und die mitgeführten Diamine zurückgeleitet. In der DE-OS 24 10 474 wird ein Verfahren beschrieben, bei dem man eine wäßrige Lösung von Nylon-6,6-Salz einer Polyamidschmelze zuführt und das Gemisch in einem Wärmetauscher unter Dampfbildung erhitzt und in den unteren Teil einer Kolonne leitet, wobei sich Dampf und Präpolymeres trennen. Das Präpolymere kondensiert im Sumpf der Kolonne und wird zum Teil wieder zurückgeführt. Die Dämpfe werden in der darüberliegenden Kolonne rektifiziert und die darin enthaltenen Diamine zurückgeleitet.

Aus der US-PS 3 948 862 ist ein verfahren bekannt, bei dem man die Kondensation in einem sich erweiternden Rohr, das durch Ventile in Zonen unterteilt ist, die auch Einbauten enthalten können, durchführt. Es wird kein Hinweis gegeben, wie der Gehalt an Triaminen zu senken ist.

Die nach dem Stand der Technik bekannten Verfahren sind noch verbesserungsbedürftig. Durch die Weiterentwicklung der Spinntechnologie werden zunehmend höhere Anforderungen an die Qualität der Polyamide gestellt. Insbesondere sollen beim Verspinnen Abrisse und Knötchenbildung sowie Veränderungen der Viskosität bei der Verarbeitung reduziert werden. Darüber hinaus soll die Streckausbeute und die Festigkeit der erzeugten Fäden verbessert werden. Es hat sich herausgestellt, daß die Bildung von Triaminen z. B. Dihexamethylentriamin aus Hexamethylendiamin einen negativen Einfluß auf die Qualität des Polymeren hat.

Es war deshalb die technische Aufgabe gestellt, ein kontinuierliches Verfahren zur Herstellung von Polyamiden zur Verfügung zu stellen, bei dem man Polyamide erhält, die bei ihrer Verarbeitung zu Fäden eine Verbesserung hinsichtlich von Abrissen, Knötchenbildung und Streckausbeute sowie Festigkeit der Fäden ermöglichen. Insbesondere war die technische Aufgabe gestellt, die Bildung von Triaminen bei der Polykondensation sowie das Ausdampfen von Diaminen zu minimieren.

Diese Aufgabe wird gelöst in einem Verfahren zur kontinuierlichen Herstellung von Polyamiden, bei dem man in einer Vorkondensationszone eine wäßrige Lösung von Salzen aus Dicarbonsäuren mit 6 bis 18 Kohlenstoffatomen und Diaminen mit 6 bis 18 Kohlenstoffatomen unter erhöhtem Druck unter gleichzeitiger Verdampfung von Wasser und Bildung eines Präpolymeren auf 250 bis 300 °C erhitzt, Präpolymeres und Dampf trennt, das Präpolymere in eine Polykondensationszone leitet und unter einem Überdruck von 1 bis 10 bar bei einer Temperatur von 250 bis 300 °C kondensiert, dadurch gekennzeichnet, daß man die wäßrige Salzlösung im ersten Drittel der rohrförmigen mit Einbauten versehenen Vorkondensationszone unter einem Überdruck von 1 bis 10 bar bis zu einem Umsetzungsgrad von mindestens 93 % kondensiert und in den restlichen zwei Dritteln der Vorkondensationszone das Präpolymere und die Dampfphase intensiv miteinander in Berührung bringt.

Das neue Verfahren hat den Vorteil, daß man Polyamide erhält, die bei der Verarbeitung zu Fäden verbesserte Eigenschaften aufweisen. Insbesondere hat das neue Verfahren den Vorteil, daß die Bildung von Triaminen, z. B. Dihexamethylentriamin, sowie das Ausdampfen von Diaminen vermindert wird.

Erfindungsgemäß verwendet man wäßrige Lösungen von Salzen von Dicarbonsäuren mit 6 bis 18 Kohlenstoffatomen und Diaminen mit 6 bis 18 Kohlenstoffatomen.

Bevorzugt geht man von wäßrigen Lösungen von Salzen aus $\alpha,\omega$- Alkandicarbonsäuren mit 6 bis 12 Kohlenstoffatomen und $\alpha,\omega$-Alkandiaminen mit 6 bis 12 Kohlenstoffatomen, insbesondere solchen mit gerader Kohlenstoffkette, aus. Geeignete Dicarbonsäuren sind beispielsweise Azelainsäure, Adipinsäure, Korksäure, Sebacinsäure oder Decandicarbonsäure, Terephthalsäure oder Naphthalindicarbonsäure. Bevorzugte $\alpha,\omega$-Alkandicarbonsäuren haben 6 bis 10 Kohlenstoffatome.

Geeignete Diamine sind beispielsweise Hexamethylendiamin, Octamethylendiamin oder Decamethylendiamin, Bis(4-aminocyclohexyl)methan, Bis(4-amino-3-methylcyclohexyl)-methan, Bis(4-aminocyclohexyl)-propan-2,2. Bevorzugte $\alpha,\omega$-Alkandiamine haben 6 bis 10 Kohlenstoffatome.

Besondere Bedeutung haben Nylon-6,6, -6,9-, 6,10 oder 6,12-Salz, insbesondere Nylon-6,6-Salz erlangt. Die verwendeten wäßrigen Lösungen haben in der Regel einen Gehalt von 30 bis 70 Gew.-%, insbesondere 50 bis 65 Gew.-%. Es versteht sich, daß Dicarbonsäuren und Diamine im wesentlichen in äquivalenten Mengen in den Salzen vorliegen.

Zudem ist es möglich, Lactame, insbesondere Caprolactam, mitzuverwenden zum Zwecke der Herstellung von Mischpolyamiden.

Erfindungsgemäß leitet man die wäßrige Salzlösung vorteilhaft mit einer Temperatur von 50 bis 100 °C kontinuierlich in eine rohrförmige mit Einbauten versehene Vorkondensationszone. Dort wird die wäßrige Salzlösung im ersten Drittel unter gleichzeitiger Verdampfung von Wasser und Bildung eines Präpolymeren unter einem Überdruck von 1 bis 10 bar auf eine Temperatur von 250 bis 300 °C erhitzt. Vorteilhaft wendet man einen Überdruck von 2 bis 6 bar an und erhitzt auf eine Temperatur von 270 bis 290 °C. Es versteht sich, daß die angewandte Temperatur über dem Schmelzpunkt des jeweils herzustellenden Polymeren liegt. Zum ersten Drittel der Vorkondensationszone wird soviel Wärme zugeführt, daß ein Umsetzungsgrad von mindestens 93 %, insbesondere 95 bis 98 %, erreicht wird.

Die Vorkondensationszone ist vorteilhaft als Röhrenbündel ausgebildet. Die Röhren sind mit Einbauten versehen, um eine große Oberfläche zu schaffen. Dies wird erreicht beispielsweise durch Bestücken mit Füllkörpern wie Raschigringen, Metallringen oder insbesondere Füllkörpern aus Drahtnetz. Vorteilhaft beträgt die freie Oberfläche je 1 Reaktionsraum 0,7 bis 1,5 m².

In den restlichen zwei Dritteln der Vorkondensationszone werden das Präpolymere und die Dampfphase intensiv miteinander in Berührung gebracht. Hierdurch wird die Menge des mit dem Wasserdampf freigesetzten Diamins erheblich vermindert. Es versteht sich, daß die gleichen Temperatur- und Druckbedingungen wie am Ende des ersten Drittels der Vorkondensationszone vorliegen. Es wird jedoch mit dem Wärmeübertragungsmittel nur soviel Wärme zugeführt, um die Temperatur aufrecht zu erhalten. In der Vorkondensationszone hält man insgesamt vorteilhaft eine Verweilzeit von 1 bis 15 Minuten, insbesondere 3 bis 10 Minuten, ein.

Das aus der Vorkondensationszone austretende zweiphasige Gemisch aus Dämpfen und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die beim Verdampfen des Wassers freigesetzt wurden. Diese Brüden werden vorteilhaft in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Vorkondensationszone betrieben. Die in den Brüden enthaltenen Diamine werden hierbei abgetrennt und wieder in die Vorkondensationszone zurückgeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad aus niedermolekularem Polyamid und restlichen Mengen an nichtumgesetzten Salzen besteht und in der Regel eine relative Viskosität von 1,2 bis 2,0 hat, wird in eine Polymerisationszone geleitet. In der Polymerisationszone wird die anfallende Schmelze bei einer Temperatur von 250 bis 300 °C, insbesondere 270 bis 290 °C, und unter einem Überdruck von 1 bis 10 bar, insbesondere 2 bis 6 bar, polykondensiert. Vorteilhaft werden die hierbei freiwerdenden Dämpfe zusammen mit den obengenannten Brüden in der Kolonne rektifiziert. Vorzugsweise hält man in der Polykondensationszone eine Verweilzeit von 5 bis 30 Minuten ein. Das so erhaltene Polyamid, das in der Regel eine relative Viskosität von 1,7 bis 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Wassers. Geeignete Austragszonen sind beispielsweise Entgasungsextruder. Die so von Wasser befreite Schmelze wird dann in Stränge gegossen und granuliert. Das erhaltene Granulat wird in fester Phase mittels überhitztem Wasserdampf bei einer Temperatur zum Beispiel von 170 bis 225 °C bis zur gewünschten Viskosität kondensiert. Vorteilhaft verwendet man hierfür den im Kopf der Kolonne anfallenden Wasserdampf.

Nach einer anderen bevorzugten Arbeitsweise wird die aus der Polykondensationszone ausgetragene Polyamidschmelze in eine weitere Kondensationszone geleitet und dort unter fortlaufender Ausbildung neuer Oberflächen bei einer Temperatur von 270 bis 290 °C vorteilhaft unter vermindertem Druck, z. B. von 1 bis 500 mbar, bis zur gewünschten Viskosität kondensiert. Geeignete Vorrichtungen sind als Finisher bekannt.

Übliche Zusätze wie Mattierungsmittel, z. B. Titandioxid, oder Stabilisatoren können der wäßrigen Salzlösung, z. B. als Suspension in Wasser, am Eingang der Vorkondensationszone zugeführt oder in Form von Konzentraten im Verlauf der Polykondensation zugesetzt werden.

Die nach dem Verfahren der Erfindung hergestellten Polyamide eignen sich zur Herstellung von Fäden und Fasern, Folien und Formkörpern.

Das Verfahren nach der Erfindung sei an folgenden Beispielen veranschaulicht.

Beispiel 1

Eine 62 gew.-%ige Nylon-6,6-Salzlösung wird mit einer Temperatur von 80 °C, mit einer Geschwindigkeit entsprechend einer Polyamidmenge von 5 kg/Std mittels einer Dosierpumpe von unten in ein vertikal angeordnetes 3 m langes Rohr eingeleitet. Das Rohr ist mit Raschigringen bestückt und hat eine freie Oberfläche von ca. 2 m². Im ersten Drittel des Rohres wird durch Beheizen auf 280 °C das Lösungswasser sowie der größte Teil des bei der Reaktion freiwerdenden Wassers verdampft und ein Umsetzungsgrad von mindestens 93 % erreicht. Im restlichen Teil des Rohres erfolgt ein inniger Stoffaustausch zwischen dem Hexamethylendiamin enthaltenden Wasserdampf und dem Präpolymeren. Die Temperatur des Präpolymeren beträgt 278 °C. Das aus der Vorkondensationszone austretende Gemisch aus Präkondensat und Wasserdampf wird in einem Abscheider in Wasserdampf und Schmelze getrennt. Die Schmelze verweilt im Abscheider, der als Polykondensationszone dient, noch 10 Minuten, wird dann mittels einer Austragsschnecke mit Ausdampfzone in Form von Strängen ausgetragen, in einem Wasserbad verfestigt und anschließend granuliert.

Der Abscheider wird mittels einer Druckhalteeinrichtung, die nach der Kolonne angeordnet ist, unter einem Druck von 5 bar gehalten. Es versteht sich, daß dieser Druck auch in der Vorkondensationszone eingehalten wird. Der im Abscheider abgetrennte Wasserdampf wird in eine Füllkörperkolonne mit ca. 10 theoretischen Böden geführt, in der am Kopf ca. 1,0 1/Std Wasser zur Erzeugung eines Rücklaufs aufgegeben werden. Am Kolonnenkopf stellt sich eine Temperatur von 152 °C ein. Der nach dem Entspannungsventil austretende Wasserdampf wird kondensiert und hat einen Hexamethylendiamingehalt von kleiner 0,05 Gew.-%. Die im Kolonnensumpf anfallende wäßrige Lösung von Hexamethylendiamin enthält 2 bis 3 % Hexamethylendiamin, bezogen auf Polyamid, und wird wieder mit der wäßrigen Nylon-6,6-Salzlösung der Vorkondensationszone zugeführt. Die Verweilzeit in der Vorkondensationszone beträgt ca. 9 Minuten. Der Gehalt an Bis-hexamethylentriamin des Vorkondensats betrug 0,05 bis 0,1 ‰. Nach Austritt der Schmelze aus dem Abscheider hatte das Polymere einen Gehalt an Bis-hexamethylentriamin von 0,15 ‰ und eine relative Viskosität von 1,9 sowie äquivalente Endgruppen von 109 COOH : 107 NH$_2$. Die Schwankungsbreite der Endgruppen war gering.

Im Austragsextruder wird die Schmelze auf Normaldruck entspannt und bei einer Verweilzeit von kleiner 1 Minute praktisch nicht mehr weiterkondensiert. Das erhaltene Granulat wurde durch kontinuierliche Festphasenkondensation mit überhitztem Wasserdampf bei 182 °C und einer Verweilzeit von 12 Stunden auf eine Endviskosität von $\eta_{rel} = 2,50$ gebracht.

**Patentansprüche**

1. Verfahren zur kontinuierlichen Herstellung von Polyamiden, bei dem man in einer Vorkondensationszone eine wäßrige Lösung von Salzen aus Dicarbonsäuren mit 6 bis 18 Kohlenstoffatomen und Diaminen mit 6 bis 18 Kohlenstoffatomen unter erhöhtem Druck unter gleichzeitiger Verdampfung von Wasser und Bildung eines Präpolymeren auf 250 bis 300 °C erhitzt, Präpolymeres und Dampf trennt, das Präpolymere in eine Polykondensationszone leitet und unter einem Überdruck von 1 bis 10 bar, bei einer Temperatur von 250 bis 300 °C kondensiert, dadurch gekennzeichnet, daß man die wäßrige Salzlösung im ersten Drittel der rohrförmigen mit Einbauten versehenen Vorkondensationszone unter einem Überdruck von 1 bis 10 bar bis zu einem Umsetzungsgrad von mindestens 93 % kondensiert und in den restlichen zwei Dritteln der Vorkondensationszone das Präpolymere und die Dampfphase intensiv miteinander in Berührung bringt.

2. Verfahren nach Anspruch 1, dadurch gekennzeichnet, daß man in der Vorkondensationszone eine Verweilzeit von 1 bis 15 Minuten einhält.

3. Verfahren nach den Ansprüchen 1 und 2, dadurch gekennzeichnet, daß die Vorkondensationszone mit Füllkörpern bestückt ist.

4. Verfahren nach den Ansprüchen 1 bis 3, dadurch gekennzeichnet, daß man am Austritt aus der Vorkondensationszone einen Umsetzungsgrad von 95 bis 98 % einhält.

5. Verfahren nach den Ansprüchen 1 bis 4, dadurch gekennzeichnet, daß das Präpolymere beim Austritt aus der Vorkondensationszone einen Wassergehalt von 0,2 bis 5 Gew.-% hat.

6. Verfahren nach den Ansprüchen 1 bis 5, dadurch gekennzeichnet, daß man den entstehenden Dampf in einer Kolonne unter dem bei der Vorkondensation angewandten Druck rektifiziert und das abgetrennte Diamin mit der Ausgangssalzlösung in die Vorkondensationszone zurückführt.

7. Verfahren nach den Ansprüchen 1 bis 6, dadurch gekennzeichnet, daß man das Polyamid schmelzflüssig aus der Polykondensationszone durch eine Austragszone unter Entfernung von Wasser leitet, granuliert und in fester Phase bis zur gewünschten Viskosität kondensiert.

8. Verfahren nach den Ansprüchen 6 und 7, dadurch gekennzeichnet, daß man den am Kopf der Kolonne anfallenden Dampf für die Kondensation in fester Phase verwendet.

9. Verfahren nach den Ansprüchen 1 bis 6, dadurch gekennzeichnet, daß man das aus der Polykondensationszone schmelzflüssig ausgetragene Polyamid in einer weiteren Kondensationszone unter fortlaufender Ausbildung neuer Oberflächen bis zur gewünschten Viskosität kondensiert.

**Claims**

1. A process for the continuous preparation of nylon, in which an aqueous solution of a salt of a dicarboxylic acid of 6 to 18 carbon atoms and a diamine of 6 to 18 carbon atoms is heated to 250-300 °C in a precondensation zone under superatmospheric pressure with simultaneous evaporation of water and formation of a prepolymer, the prepolymer and vapor are separated, and the prepolymer is passed into a polycondensation zone and condensed under superatmospheric pressure of from 1 to 10 bar at from 250 to 300 °C, wherein the aqueous salt solution is condensed in the first third of the tubular precondensation zone, which is provided with baffles, under superatmospheric pressure of from 1 to 10 bar until a degree of conversion of not less than 93 % is reached, and the prepolymer and the vapor phase are brought into intimate contact with one another in the remaining two thirds of the precondensation zone.

2. A process as claimed in claim 1, wherein a residence time of from 1 to 15 minutes is maintained in the precondensation zone.

3. A process as claimed in claims 1 and 2, wherein the precondensation zone is charged with packing.

4. A process as claimed in any of claims 1 to 3, wherein the degree of conversion of the product emerging from the precondensation zone is maintained at from 95 to 98 %.

5. A process as claimed in any of claims 1 to 4, wherein, on emerging from the precondensation zone, the prepolymer has a water content of from 0.2 to 5 % by weight.

6. A process as claimed in any of claims 1 to 5, wherein the vapor formed is rectified in a column under the pressure employed in the precondensation, and the diamine separated off is recycled to the precondensation zone, together with the starting salt solution.

7. A process as claimed in any of claims 1 to 6, wherein the nylon, in the form of a melt, is passed from the polycondensation zone through a discharge zone with removal of water, and is granulated and then condensed in the solid phase until the desired viscosity is obtained.

8. A process as claimed in claims 6 and 7, wherein the vapor obtained at the top of the column is used for the condensation in the solid phase.

9. A process as claimed in any of claims 1 to 6, wherein the nylon discharged in the form of a melt from the polycondensation zone is condensed in a further condensation zone, with continuous formation of new surfaces, until the desired viscosity is obtained.

**Revendications**

1. Procédé pour la préparation en continu de polyamides, dans lequel on chauffe une solution aqueuse de sels d'acides dicarboxyliques en $C_6$ à $C_{18}$ et de diamines en $C_6$ à $C_{18}$, dans une zone de pré-condensation, sous une pression accrue, entre 250 et 300 °C, ce qui donne lieu à une formation concomitante de vapeur d'eau et d'un prépolymère, on sépare la vapeur d'eau du pré-polymère et on amène celui-ci dans une zone de polycondensation, dans laquelle il est condensé à une température de 250 à 300 °C sous une surpression de 1 à 10 bars, caractérisé en ce que, dans le premier tiers de la zone de pré-condensation tubulaire, pourvue de chicanes, la solution aqueuse de sel(s) est soumise à une surpression de 1 à 10 bars et condensée jusqu'à un degré de condensation d'au moins 93 %, et dans les deux tiers restants de la zone de pré-condensation, le pré-polymère et la phase vapeur sont intensivement mélangés.

2. Procédé suivant la revendication 1, caractérisé en ce que la durée de séjour dans la zone de pré-condensation est comprise entre 1 et 15 minutes.

3. Procédé suivant les revendications 1 et 2, caractérisé en ce que la zone de pré-condensation est garnie de corps de remplissage.

4. Procédé suivant les revendications 1 à 3, caractérisé en ce que, à la sortie de la zone de pré-condensation, le degré de condensation se situe entre 95 et 98 %.

5. Procédé suivant les revendications 1 à 4, caractérisé en ce que, à la sortie de la zone de pré-condensation, le pré-polymère possède une teneur en eau entre 0,2 et 5 % en poids.

6. Procédé suivant les revendications 1 à 5, caractérisé en ce que la vapeur formée est rectifiée dans une colonne, à la pression appliquée lors de la pré-condensation, et la diamine séparée est recyclée avec la solution saline de départ dans la zone de pré-condensation.

7. Procédé suivant les revendications 1 à 6, caractérisé en ce que le polyamide est soutiré de la zone de polycondensation à l'état fondu, traverse une zone d'évacuation, dans laquelle l'eau est éliminée, puis est granulé et condensé en phase solide jusqu'à la viscosité désirée.

8. Procédé suivant les revendications 6 et 7, caractérisé en ce que la vapeur soutirée au sommet de la colonne est utilisée pour la condensation en phase solide.

9. Procédé suivant les revendications 1 à 6, caractérisé en ce que le polyamide soutiré de la zone de polycondensation à l'état fondu est condensé dans une zone de condensation supplémentaire, avec formation continue de nouvelles surfaces, jusqu'à la viscosité voulue.